# EUROPEAN PATENT SPECIFICATION

(11) **EP 1 744 486 B1**
(45) Date of publication and mention of the grant of the patent: **14.11.2007**
(21) Application number: 05291513.9
(22) Date of filing: 12.07.2005
(51) Int. Cl.: H04L 12/00, H04L 1/00, H04B 10/20, H04B 10/08

(54) **Simplified remote interface device and method for determining a failure at an optical fiber link terminated with a remote interface device**
Schnittstellenvorrichtung und Verfahren zur Fehlerbestimmung in einer faseroptischen Verbindung mit einer solchen Vorrichtung
Dispositif d'interface et méthode pour déterminer une défaillance dans une liaison à fibre optique terminée avec un tel dispositif

(43) Date of publication of application: 17.01.2007
(73) Proprietor: Alcatel Lucent, 75008 Paris (FR)
(72) Inventor: Jäkel, Hans-Jörg, 70439 Stuttgart (DE)
(74) Representative: Knecht, Ulrich Karl

(56) References cited:
- WO-A-03/021858
- US-A1- 2002 181 503
- US-A1- 2004 165 595
- "MRV - First in the First Mile; Optical Ethernet Service Demarcation (OESD)" MRV COMMUNICATIONS (WHITE PAPER), June 2004 (2004-06), XP002358708
- STEINDER M L ET AL: "A survey of fault localization techniques in computer networks" SCIENCE OF COMPUTER PROGRAMMING, ELSEVIER SCIENCE PUBLISHERS BV., AMSTERDAM, NL, vol. 53, no. 2, November 2004 (2004-11), pages 165-194, XP004566811 ISSN: 0167-6423

## Description

### Background of the invention

The invention relates to a remote interface device for terminating a remote optical fiber link, with a network input, a network output, a customer input and a customer output for data signals.

Such a remote interface device is known from the commercial publication "MRV ― First in the First Mile, Optical Ethernet Service Demarcation (OESD)", MRV Communications, 2004.

Optical networks are used for quick data transfer in numerous applications. A user or customer of the optical network is connected to the optical network of a network provider by means of a remote interface device. The remote interface device is, on the one hand, connected to a central distribution facility of the network provider, and, on the other hand, connected to the application facility of the customer. The remote interface device is typically located on the customer's premises.

The network provider requires status information about the fiber connection to his customer. In case of a connection failure, the network provider must repair the connection if the failure falls within his responsibility. Therefore, it is necessary to provide the network provider with information about the type of connection failure.

In the state of the art, part of the data transfer capacity between the remote interface device and the central distribution facility is reserved for status information at all times, i.e. also during failure-free operation. This is disadvantageous in that this part of the data transfer capacity is lost for the transfer of customer's data.

In CWDM (coarse wavelength division multiplexing) systems, expensive network elements are used which reserve a complete data channel for status information. In Ethernet interfaces it is known to transport status information by special, additional data packets, see MRV Communications above, what limits the bandwidth for customer data.

### Object of the invention

It is the object of this invention to provide a simplified remote interface device which allows the use of the full data transfer capacity for customer's data during normal operation, and which allows a reliable detection of connection failures and sufficient distinction between different types of the connection failures.

### Short description of the invention

This object is achieved, in accordance with the invention, by a remote interface device as introduced in the beginning, characterized in that the device is designed such that during normal operation, only data received at the customer input is sent onto the network output, that the device is further designed such that in case of a failure at the network input or a failure at the hardware of the remote interface device, the network output is closed, i.e. no signal at all is sent onto the network output, and in case of a failure at the customer input, a dedicated auxiliary signal only is sent onto the network output. Thus, at the network output the status information of the remote interface device is provided, and this status information can be read out at a central distribution facility of the network provider connected to said network output of the remote interface device. At the network output, customer signals indicate normal operation or no failures, respectively, whereas no signal at all indicates a failure in the field of responsibility of the network provider (such as a breakdown at the network provider's equipment). In case of a dedicated auxiliary signal at the network output, a failure in the field of responsibility of the customer is present. A typical dedicated auxiliary signal in accordance with the invention comprises periodic partial signals. As a result, the provision of status information does not limit the data transfer capacity at the remote interface device during normal operation. Information about a type of a failure is only transferred in case of an actual failure, in accordance with the invention. The status information is provided in a particularly simple way, keeping the remote interface device inexpensive and small.

In a preferred embodiment of the inventive remote interface device, the device is designed such that the network output controls a multitude of channels for data transfer, in particular according to CWDM, and that the device is designed such that during normal operation, all channels of the network output are reserved for sending data received at the customer input only. In other words, during normal operation, there is no channel reserved exclusively for status information. This makes the inventive embodiment highly effective and allows a high data transfer rate during normal operation, i.e. failure-free operation.

A further development of this embodiment is characterized in that the device is designed such that in case of a failure or failures at the network input or a failure or failures at the hardware of the remote interface device that can be allocated to individual channels, only these channels are shut down at the network output, and in case of a failure or failures that cannot be allocated to individual channels or that impact all channels, the network output is shut down completely, and in case of a failure or failures at the customer input that can be allocated to individual channels, a dedicated auxiliary signal is sent on the concerned channels only at the network output. This makes the inventive, simple failure information exchange available to each channel, resulting in a highly efficient network.

Another preferred embodiment of the inventive device is characterized in that the device is designed such that in case of a failure at the customer input and at least one more failure at the network input and/or at the hardware of the remote interface device, the network output is closed. In this embodiment, the indication of failures in the field of responsibility of the network provider have highest priority. The network provider is always informed when a repair of his equipment is necessary. This prevents misunderstandings and eases the network maintenance.

Further preferred is an embodiment characterized in that the dedicated auxiliary signal comprises partial signals with a length of between 0.1 and 10 seconds, in particular between 0.5 and 3 seconds, preferably about 2 seconds, and that time intervals between partial signals have a length of between 20 and 300 seconds, in particular between 30 and 120 seconds, preferably about 60 seconds. Said time intervals have been found to be particularly useful for failure identification. The auxiliary signal is typically periodic in time. In accordance with the invention, the dedicated auxiliary signal can be re-used for an automatic laser shutdown (in particular within a central distribution facility of a network provider). The auxiliary signal can then comply with the standard G.664 (previous standard: G.958), with 2.00 +/- 0.25 seconds signal length and from 100 seconds (previous standard: 60 seconds) up to 300 seconds break length.

In a particularly preferred embodiment of the inventive device, the network input, the network output, the customer input and the customer output are designed for Gigabit Ethernet. Gigabit Ethernet is an important application working well with the invention.

An advantageous embodiment of the device comprises a remote link card and a remote input/output card. This embodiment has a simple and inexpensive design.

A further advantageous embodiment of the device comprises a free programmable gate array (FPGA) and/or one or several ASICs. This keeps the design of the remote interface device simple, too.

Also within the scope of the invention is an optical network comprising a central distribution facility connected to at least one inventive device as described above via the network input and the network output. The network has a simple and inexpensive failure identification system.

An embodiment of this inventive optical network is characterized in that the central distribution facility comprises an SDH/SONET matrix element and a local input/output card.

Further within the scope of the invention is a method for determining a failure at a remote optical fiber link, terminated with a remote interface device, in particular as described above, wherein the failure is detected by a central distribution facility device, wherein the central distribution facility is connected with the remote interface device via a network input and a network output of the remote interface device, characterized in that in case of no failure, the central distribution facility receives a data signal only from the remote interface device, that in case of a failure only at a customer input of the remote interface device, the central distribution facility receives and detects a dedicated auxiliary signal only from the remote interface device, and that in case of a failure at the hardware of the remote interface device and/or at the network input of the remote interface device and/or at the network output of the remote interface device, the central distribution facility receives and detects no signal at all from the remote interface device. The method allows to detect and identify failures of a remote interface device, in particular as a part of an optical network, in a simple way and with no jamming of data transfer capacity.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a schematic of an optical fiber network with a remote interface device, both in accordance to the invention;
- Fig. 2: shows a schematic of a remote interface device in accordance with the invention.

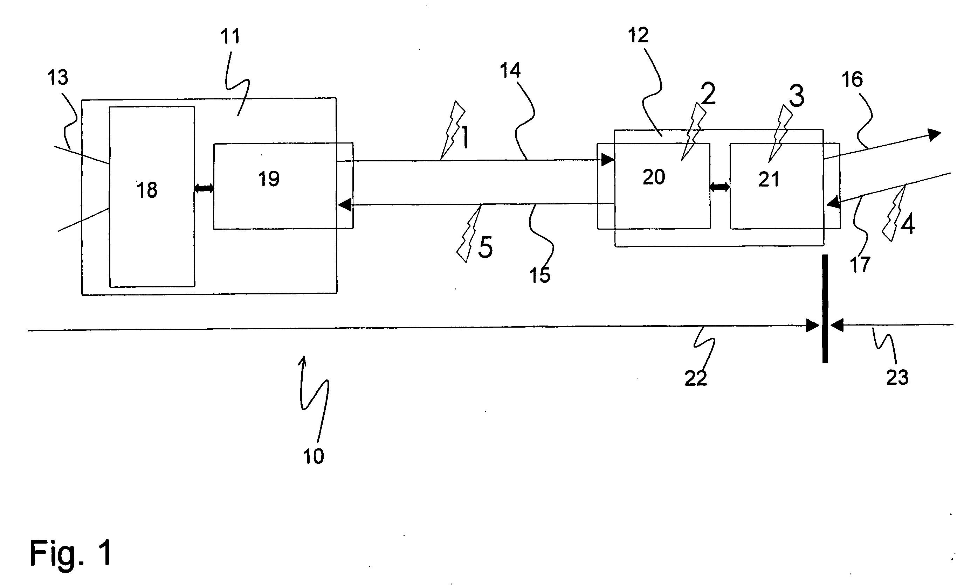

**Fig. 1** shows schematically an optical network 10 comprising a central distribution facility 11 and a remote interface device 12 in accordance with the invention. The optical network 10 transfers data with optical fibers by Gigabit Ethernet. The central distribution facility 11 is connected to large distance data transfer facilities, as suggested by reference numeral 13. The central distribution facility 11 and the remote interface device 12 are connected by two data lines. Note that these two lines may be realized in practice by a single optical fiber. Typical lengths of the two lines are 1 through 40 km. The upper line transfers data from the central distribution facility 11 to the remote interface device 12, and therefore this line constitutes the network input 14 of the remote interface device 12. The lower line transfers data from the remote interface device 12 to the central distribution facility 11, and therefore constitutes a network output 15 of the remote interface device 12. The remote interface device 12 is connected to a customer's application equipment by two further lines. The upper line transfers data from the remote interface device 12 to the customer's equipment, and therefore constitutes a customer output 16 of the remote interface device 12. The lower line transfers data from the customer's equipment to the remote interface device 12, and therefore constitutes a customer input 17 of the remote interface device 12.

The central distribution facility 11 comprises an SDH (synchronous digital hierarchy) matrix card 18 and a local IO (input/output) card 19. The remote interface device 12 comprises a remote link card 20 and a remote IO card 21. The left part of the optical network 10 is the network operator's field of responsibility 22, and the right part of the optical network 10 is the customer's field of responsibility 23. Note that the connections of the customer output 16 and the customer input 17 belong to the customer's field of responsibility 23, despite their location on the remote IO card 21.

In accordance with the invention, the remote interface device 12 is equipped with a laser system that may generate optical signals on the network output 15. The remote interface device 12 requires a power supply, in particular for this purpose. However, the connection from the remote interface device 12 to the central distribution facility 11 may consist of a naked optical fiber only. This naked fiber transmits merely customer data during normal (i.e. failure-free) operation; note that the naked fiber without WDM cannot transmit any additional surveillance information then. Indeed, transmission of surveillance information is not necessary as long as everything is working properly at the remote interface device 12.

In case of a failure at the remote interface card 12, i.e. at the network termination, the network operator needs information that a failure has occurred, and he needs information whether the failure has occurred within his filed of responsibility 22 or the customer's 23. When there is no customer's data transmitted on the network output 15, the network operator knows that a failure has occurred. In Fig. 1, failure locations are indicated with little flashes.

Failures that are within the network provider's responsibility 22 can be:
- Error 1: fiber problems (such as a break) at the line of the network input 14;
- Error 2: problem of the remote link card 20;
- Error 3: problem of the remote IO card 21, e.g. TX fail (not for TX degraded); note that errors 2, 3 may be generalized as all hardware problems of the remote interface device 12;
- Error 5: fiber problems (such as a break) at the line of the network output 15.
   In order to register the errors 1, 2 or 3, the remote interface device 12 may run test procedures regularly. If one of the errors 1, 2, 3 is registered, the remote interface device 12 shuts down the network output 15, and no more signals are generated by the laser system of the remote link card 20. In case of error 5, optical signals may not pass the line of the network output 15 anyway. So if one of the errors 1, 2, 3 or 5 occurs, the central distribution facility does not receive any signals at all from the network output 15. The local IO card 19 then raises a LOS (=loss of signal) alarm. The network provider may then initiate repair procedures.
   A failure that is within the scope of the customer's responsibility can be:
- Error 4: no useful signals are received at the customer input 17.
   In order to register error 4, the remote interface device 12 may run suitable test procedures regularly. In case of an error 4 and no other concurrent errors, the laser system of the remote link card 20 generates a dedicated auxiliary signal on the network output 15. E.g., the auxiliary signal comprises pulses of 2 seconds length which are repeated every minute. The auxiliary signal is registered at the local IO card 19 at the central distribution facility 11, and a different LOS alarm is raised. Then the network operator knows that the network up to the network termination, i.e. the remote interface device, is okay. If desired, the network operator may brief the customer then. A notification of error 4 may be cleared after some time, such as 3 minutes, during which no more auxiliary signal has been registered.

If an error is registered at the local IO card 19, shutdown procedures may be initiated. This may be necessary to protect personnel and/or equipment, in particular during subsequent repair procedures.

For convenience, and in accordance with the invention, the remote interface device 12 displays the errors of the different types 1, 2, 3 and/or 4 separately by suitable indication means, such as alarm lamps, LEDs or alphanumerical displays. This simplifies repair procedures of the network operator. Said means may, advantageously, be readable by the customer.

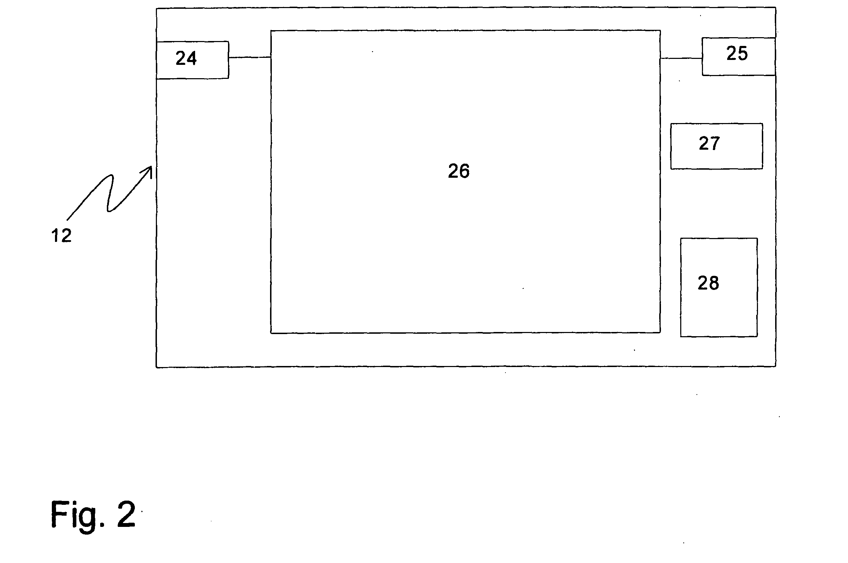

Fig. 2 shows schematically a hardware architecture of an inventive remote interface device 12, designed for Gigabit Ethernet. It comprises a first optical fiber connection 24 to a central distribution device, the first optical connection 24 acting both as network input and network output. It further comprises a second optical fiber connection 25 to a customer's application equipment. The connections 24, 25 may be realized with SFP (small form factor pluggable) modules. The connections 24, 25 are linked to an FPGA (free programmable gate array) 26, which is set up for all substantial functions of the remote interface device 12. The remote interface device 12 further comprises several LEDs 27 for indicating status information, and a power supply (DC/DC) 28.

The remote interface device 12 is particularly inexpensive and may be realized with standard optical and electro-optical components.

## Claims

1. Remote interface device (12) for terminating a remote optical fiber link, with a network input (14), a network output (15), a customer input (17) and a customer output (16) for data signals,
**characterized in that**
the device (12) is designed such that during normal operation, only data received at the customer input (17) is sent onto the network output (15), that the device (12) is further designed such that in case of a failure at the network input (14) or a failure at the hardware of the remote interface device (12), the network output (15) is closed, i.e. no signal at all is sent onto the network output (15),
and in case of a failure at the customer input (17), a dedicated auxiliary signal only is sent onto the network output (15).

2. Device (12) according to claim 1, **characterized in that** the device (12) is designed such that the network output (15) controls a multitude of channels for data transfer, in particular according to CWDM,
and that the device (12) is designed such that during normal operation, all channels of the network output (12) are reserved for sending data received at the customer input (17) only.

3. Device (12) according to claim 2, **characterized in that** the device (12) is designed such that in case of a failure or failures at the network input (14) or a failure or failures at the hardware of the remote interface device (12) that can be allocated to individual channels, only these channels are shut down at the network output (15), and in case of a failure or failures that cannot be allocated to individual channels or that impact all channels, the network output (15) is shut down completely,
and in case of a failure or failures at the customer input (17) that can be allocated to individual channels, a dedicated auxiliary signal is sent on the concerned channels only at the network output (15).

4. Device (12) according to claim 1, **characterized in that** the device (12) is designed such that in case of a failure at the customer input (17) and at least one more failure at the network input (14) and/or at the hardware of the remote interface device (12), the network output (15) is closed.

5. Device (12) according to claim 1, **characterized in that** the dedicated auxiliary signal comprises partial signals with a length of between 0.1 and 10 seconds, in particular between 0.5 and 3 seconds, preferably about 2 seconds,
and that time intervals between partial signals have a length of between 20 and 300 seconds, in particular between 30 and 120 seconds, preferably about 60 seconds.

6. Device (12) according to claim 1, **characterized in that** the network input (14), the network output (15), the customer input (17) and the customer output (16) are designed for Gigabit Ethernet.

7. Device (12) according to claim 1 **characterized in that** it comprises a remote link card (20) and a remote input/output card (21).

8. An optical network (10) comprising a central distribution facility (11) connected to at least one device (12) according to claim 1 via the network input (14) and the network output (15).

9. An optical network (10) according to claim 8 **characterized in that** the central distribution facility (11) comprises an SDH/SONET matrix element (18) and a local input/output card (19).

10. Method for determining a failure at a remote optical fiber link, terminated with a remote interface device (12), in particular according to claim 1, wherein the failure is detected by a central distribution facility (11), wherein the central distribution facility (11) is connected with the remote interface device (12) via a network input (14) and a network output (15) of the remote interface device (12),
**characterized in that**
in case of no failure, the central distribution facility (11) receives a data signal only from the remote interface device (12),
that in case of a failure only at a customer input (17) of the remote interface device (12), the central distribution facility (11) receives and detects a dedicated auxiliary signal only from the remote interface device (12),
and that in case of a failure at the hardware of the remote interface device (12) and/or at the network input (14) of the remote interface device (12) and/or at the network output (15) of the remote interface device (12), the central distribution facility (11) receives and detects no signal at all from the remote interface device (12).

## Patentansprüche

1. Schnittstellenvorrichtung (12) zum Abschluss einer faseroptischen Fernverbindung mit einem Netzeingang (14), einem Netzausgang (15), einem Kundeneingang (17) und einem Kundenausgang (16) für Datensignale,
**dadurch gekennzeichnet, dass**
die Vorrichtung (12) so gestaltet ist, dass während des normalen Betriebs nur am Kundeneingang (17) empfangene Daten an den Netzausgang (15) gesendet werden und dass die Vorrichtung (12) ferner so gestaltet ist, dass im Fall eines Fehlers am Netzeingang (14) oder eines Fehlers in der Hardware der Schnittstellenvorrichtung (12) der Netzausgang (15) geschlossen wird, d.h. dass überhaupt kein Signal an den Netzausgang (15) gesendet wird; und im Fall eines Fehlers am Kundeneingang (17) nur ein dediziertes Hilfssignal an den Netzausgang (15) gesendet wird.

2. Vorrichtung (12) nach Anspruch 1, **dadurch gekennzeichnet, dass** die Vorrichtung (12) so gestaltet ist, dass der Netzausgang (15) eine Vielzahl von Kanälen für die Datenübertragung, insbesondere nach dem CWDM-Verfahren, überwacht und steuert und dass die Vorrichtung (12) so gestaltet ist, dass während des Normalbetriebs alle Kanäle des Netzausgangs (12) nur zum Senden der am Kundeneingang (17) empfangenen Daten reserviert sind.

3. Vorrichtung (12) nach Anspruch 2, **dadurch gekennzeichnet, dass** die Vorrichtung (12) so gestaltet ist, dass im Fall eines Fehlers oder mehrerer Fehler am Netzeingang (14) oder eines Fehlers oder mehrerer Fehler in der Hardware der Schnittstellenvorrichtung (12), die einzelnen Kanälen zugeordnet werden können, nur diese Kanäle am Netzausgang (15) abgeschaltet werden und im Fall eines Fehlers oder mehrerer Fehler, die nicht einzelnen Kanälen zugeordnet werden können oder die sich auf alle Kanäle auswirken, der Netzausgang (15) vollständig abgeschaltet wird und im Fall eines Fehlers oder mehrerer Fehler am Kundeneingang (17), die einzelnen Kanälen zugeordnet werden können, ein dediziertes Hilfssignal nur auf den betroffen Kanälen am Netzausgang (15) gesendet wird.

4. Vorrichtung (12) nach Anspruch 1, **dadurch gekennzeichnet, dass** die Vorrichtung (12) so gestaltet ist, dass im Fall eines Fehlers am Kundeneingang (17) und mindestens eines weiteren Fehlers am Netzeingang (14) und/oder in der Hardware der Schnittstellenvorrichtung (12) der Netzausgang (15) geschlossen wird.

5. Vorrichtung (12) nach Anspruch 1, **dadurch gekennzeichnet, dass** das dedizierte Hilfssignal Teilsignale mit einer Länge zwischen 0,1 und 10 Sekunden umfasst, insbesondere zwischen 0,5 und 3 Sekunden, vorzugsweise etwa 2 Sekunden,
und dass die Zeitintervalle zwischen Teilsignalen eine Länge zwischen 20 und 300 Sekunden aufweisen, insbesondere zwischen 20 und 120 Sekunden, vorzugsweise etwa 60 Sekunden.

6. Vorrichtung (12) nach Anspruch 1, **dadurch gekennzeichnet, dass** der Netzeingang (14), der Netzausgang (15), der Kundeneingang (17) und der Kundenausgang (16) für Gigabit Ethernet ausgelegt sind.

7. Vorrichtung (12) nach Anspruch 1, **dadurch gekennzeichnet, dass** sie eine Remote-Verbindungskarte (20) und eine Remote-Eingabe/Ausgabe-Karte (21) umfasst.

8. Optisches Netz (10), umfassend eine Verteilereinrichtung (11), die über den Netzeingang (14) und den Netzausgang (15) mit mindestens einer Vorrichtung (12) nach Anspruch 1 verbunden ist.

9. Optisches Netz (10) nach Anspruch 8, **dadurch gekennzeichnet, dass** die zentrale Verteilereinrichtung (11) ein SDH/SONET-Matrixelement (18) und eine lokale Eingabe/Ausgabe-Karte (19) umfasst.

10. Verfahren zur Bestimmung eines Fehlers in einer faseroptischen Fernverbindung, die mit einer Schnittstellenvorrichtung (12), insbesondere nach Anspruch 1, abgeschlossen wird, wobei der Fehler von einer zentralen Verteilereinrichtung (11) erkannt wird, wobei die zentrale Verteilereinrichtung (11) mit der Schnittstellenvorrichtung (12) über einen Netzeingang (14) und einen Netzausgang (15) der Schnittstellenvorrichtung (12) verbunden ist,
**dadurch gekennzeichnet, dass**
für den Fall, dass kein Fehler vorliegt, die zentrale Verteilereinrichtung (11) ein Datensignal nur von der Schnittstellenvorrichtung (12) empfängt;
dass im Fall eines Fehlers nur am Kundeneingang (17) der Schnittstellenvorrichtung (12) die zentrale Verteilereinrichtung (11) ein dediziertes Hilfssignal nur von der Schnittstellenvorrichtung (12) empfängt und erkennt;
und dass im Fall eines Fehlers in der Hardware der Schnittstellenvorrichtung (12) und/oder am Netzeingang (14) der Schnittstellenvorrichtung (12) und/oder am Netzausgang (15) der Schnittstellenvorrichtung (12) die zentrale Verteilereinrichtung (11) überhaupt kein Signal von der Schnittstellenvorrichtung (12) empfängt und erkennt.

## Revendications

1. Dispositif d'interface à distance (12) destiné à terminer une liaison par fibre optique à distance, comportant une entrée de réseau (14), une sortie de réseau (15), une entrée client (17) et une sortie client (16), pour les signaux de données,
**caractérisé en ce que**
le dispositif (12) est conçu de telle manière que en fonctionnement normal, seules les données reçues au niveau de l'entrée client (17) sont envoyées sur la sortie de réseau (15), le dispositif (12) est en outre conçu de façon que, en cas de panne au niveau de l'entrée de réseau (14) ou de panne au niveau du matériel du dispositif d'interface à distance (12), la sortie de réseau (15) soit fermée, c'est-à-dire qu'aucun signal n'est envoyé sur la sortie de réseau (15),
et en cas de panne au niveau de l'entrée client (17), seul un signal auxiliaire dédié est envoyé sur la sortie de réseau (15).

2. Dispositif (12) selon la revendication 1, **caractérisé en ce que** le dispositif (12) est conçu de façon que la sortie de réseau (15) contrôle une multitude de voies pour le transfert de données, en particulier selon CWDM, et le dispositif (12) est conçu de façon que en fonctionnement normal, toutes les voies de la sortie de réseau (15) soient réservées pour envoyer uniquement les données reçues au niveau de l'entrée client (17).

3. Dispositif (12) selon la revendication 2, **caractérisé en ce que** le dispositif (12) est conçu de façon que en cas d'une panne ou de pannes au niveau de l'entrée de réseau (14) ou d'une panne ou de pannes au niveau du matériel du dispositif d'interface à distance (12) qui peu(ven)t être allouée(s) à des voies individuelles, seules ces voies sont fermées au niveau de la sortie de réseau (15), et en cas d'une panne ou de pannes qui ne peu(ven)t pas être allouée(s) à des voies individuelles ou qui ont un impact sur toutes les voies, la sortie de réseau (15) est fermée complètement, et en cas d'une panne ou de pannes au niveau de l'entrée client (17) qui peu(ven)t être allouée(s) à des voies individuelles, seul un signal auxiliaire dédié est envoyé sur les voies concernées au niveau de la sortie de réseau (15).

4. Dispositif (12) selon la revendication 1, **caractérisé en ce que** le dispositif (12) est conçu de façon que en cas de panne au niveau de l'entrée client (17) et d'au moins une autre panne au niveau de l'entrée de réseau (14) et/ou au niveau du matériel du dispositif d'interface à distance (12), la sortie de réseau (15) est fermée.

5. Dispositif (12) selon la revendication 1, **caractérisé en ce que** le signal auxiliaire dédié comprend des signaux partiels d'une longueur comprise entre 0,1 et 10 secondes, en particulier entre 0,5 et 3 secondes, de préférence d'environ 2 secondes,
et **en ce que** les intervalles de temps entre les signaux partiels ont une longueur comprise entre 20 et 300 secondes, en particulier entre 30 et 120 secondes, de préférence d'environ 60 secondes.

6. Dispositif (12) selon la revendication 1, **caractérisé en ce que** l'entrée de réseau (14), la sortie de réseau (15), l'entrée client (17) et la sortie client (16) sont conçues pour Gigabit Ethernet.

7. Dispositif (12) selon la revendication 1, **caractérisé en ce qu'**il comprend une carte de liaison à distance (20) et une carte d'entrée/sortie à distance (21).

8. Réseau optique (10) comprenant un équipement central de distribution (11) connecté à au moins un dispositif (12) selon la revendication 1 via l'entrée de réseau (14) et la sortie de réseau (15).

9. Réseau optique (10) selon la revendication 8, **caractérisé en ce que** l'équipement central de distribution (11) comprend un élément de matrice SDH/SONET (18) et une carte locale d'entrée/sortie (19).

10. Procédé de détermination d'une panne au niveau d'une liaison par fibre optique à distance, terminée par un dispositif d'interface à distance (12), en particulier selon la revendication 1, dans lequel la panne est détectée par un équipement central de distribution (11), dans lequel l'équipement central de distribution (11) est connecté au dispositif d'interface à distance (12) via une entrée de réseau (14) et une sortie de réseau (15) du dispositif d'interface à distance (12),
**caractérisé en ce que**
au cas où il n'y a pas de panne, l'équipement central de distribution (11) ne reçoit qu'un signal de données depuis le dispositif d'interface à distance (12),
en cas de panne uniquement au niveau d'une entrée client (17) du dispositif d'interface à distance (12), l'équipement central de distribution (11) ne reçoit et ne détecte qu'un signal auxiliaire dédié depuis le dispositif d'interface à distance (12),
et en cas de panne au niveau du matériel du dispositif d'interface à distance (12) et/ou au niveau de l'entrée de réseau (14) du dispositif d'interface à distance (12) et/ou au niveau de la sortie de réseau (15) du dispositif d'interface à distance (12), l'équipement central de distribution (11) ne reçoit et ne détecte aucun signal depuis le dispositif d'interface à distance (12).
